# EUROPEAN PATENT SPECIFICATION

(11) **EP 1 888 959 B1**
(45) Date of publication and mention of the grant of the patent: **06.04.2011**
(21) Application number: 06732925.0
(22) Date of filing: 20.02.2006
(51) Int. Cl.: F16L 37/00, B62D 33/063

(54) **A hydraulic system**
Hydrauliksystem
Système hydraulique

(30) Priority: 12.05.2005 NL 1029030
(43) Date of publication of application: 20.02.2008
(73) Proprietor: Actuant Corporation, Glendale, Wisconsin 53209-3703 (US)
(72) Inventor: OUDELAAR, Tone, NL-7588 SB Beuningen (Ov) (NL); SCHASFOORT, Ivo, NL-7591 LH Denekamp (NL)
(74) Representative: Brookhuis, Hendrik Jan Arnold
(86) International application number: PCT/NL2006/000085
(87) International publication number: WO 2006/121325

(56) References cited:
- WO-A-01/01030
- WO-A-2004/055388
- US-A- 3 170 667
- US-A- 4 696 326
- US-A1- 2004 016 899

## Description

The present invention relates to a hydraulic system, comprising a hydraulic apparatus and a group of hydraulic lines which are connected or can be connected to the hydraulic apparatus, which group comprises at least a first and a second line, the apparatus having a housing on which a first and second connecting member are fitted, for connecting the first and the second line respectively, and the first and the second line being provided with a first and a second insertion fitting respectively.

In the case of a known embodiment (see e.g. WO 01/01030) each connecting member has a body with an insertion bore for an insertion fitting, which insertion bore extends from an insertion side, each connecting member further comprising an elastic locking member which is active at a distance from the insertion side of the insertion bore. Each insertion fitting is provided with a locking formation with which the elastic locking member engages automatically when the insertion fitting is inserted into the corresponding connecting member.

Such a known system is used in, for example, a hydraulic tilting device for tilting a cab of a vehicle, for example for the purpose of permitting maintenance on a vehicle engine disposed underneath the cab.

In the case of such hydraulic cab tilting devices a pump/reservoir unit connected by means of hydraulic hoses to the tilting cylinder is used. For this purpose, a pair of hoses leading to the piston rod side and bottom side connections respectively is used.

The use of rapid-action couplings, in the case of which simply inserting the insertion fittings into the connecting member makes the connection, is particularly advantageous, given the high production speed required during the assembly of vehicles.

US 3,170,667 discloses a hydraulic system with rapid-action couplings. The couplings have coding parts which ensure that when the lines are being fitted, the lines cannot be switched by mistake.

US 3,170,667 hence discloses a hydraulic system, comprising an apparatus and a group of hydraulic lines which are connected or can be connected to the apparatus, which group comprises at least a first and a second line, in which the apparatus has a housing on which a first and second connecting member are fitted, for connecting the first and the second line respectively, in which the first and the second line are provided with a first and a second insertion fitting respectively, each insertion fitting having an internal channel for the passage of hydraulic fluid, in which each connecting member has a body with an insertion bore for receiving an insertion fitting, which insertion bore extends from an insertion side, in which a part of each connecting member forms a coding part, in which the coding part of the first connecting member differs with regard to one or more dimensions thereof from the coding part of the second connecting member, and in which the first and second insertion fitting are such that they can be inserted only into the corresponding first and second connecting member respectively, wherein the coding part of each connecting member is formed by the insertion bore of said connecting member.

The system known from US 3,170,667 has a number of drawbacks, including a relatively complex design of the coding parts and mating parts of the fittings, requiring undesirable manufacturing steps to obtain the coding parts and the fittings, bulky design requiring extra space for locating the couplings.
In this respect it is noted that such coupling are mass-produced items, e.g. in the automotive industry.

The object of the invention is to propose an improved system, alleviating one or more of the cited drawbacks, which is advantageous particularly for use in a hydraulic cab tilting device or other drive of a movable vehicle part.

To this end, the invention provides a hydraulic system according to claim 1, wherein the coding part of each connecting member is formed by a part of the insertion bore of said connecting member between the insertion side and the locking member.

The provision of the coding part in each connecting member is thus obtained by suitable design of a part of the insertion bore. This allows for a simpler design than in US 3,170,667, lower costs (easier manufacture) and requires less space.

The system ensures that when the lines are being fitted, for example during the assembly of the vehicle (and possibly in the case of subsequent repairs and the like) the lines cannot be switched by mistake.

The invention provides in particular the possibility of disposing the hydraulic apparatus concerned in the vehicle in a position that is such that the corresponding connecting members - or their insertion bores - are not easily visible or are not visible at all for the mechanic. The coding enables the mechanic to work "by feel" without running the risk of switching the lines by mistake in the process.

This provides the designers of such vehicles, for example of lorries with a tilting cab, with the possibility of disposing the pump/reservoir unit - for example, particularly if the pump is an electrically driven pump - in a position out of sight. This greater design freedom is very advantageous.

It will be clear that the system according to the invention can also be used in, for example, other situations in the automotive industry where a high production speed is desired, for example in the case of hydraulic control devices for movable roofs, such as folding roofs and retractable hard-top roofs, and for tailgates, engine bonnets, doors etc. of a motor vehicle.

Provision is preferably made for each coding part to be a substantially cylindrical part of the insertion bore of the connecting member, the diameter of the coding part of the first connecting member being smaller than that of the second connecting member, and for the length of the coding part of the first connecting member to be less than the length of the coding part of the second connecting member, the first insertion fitting having an insertion stop which is at a distance from the locking formation that is greater than the length of the coding part of the first connecting member and is less than the length of the coding part of the second connecting member, which first insertion stop has a greater diameter than that of the coding part of the second insertion member.

This embodiment is technically easy to achieve and is advantageous for fitting of the line on the connecting member, since the insertion fitting does not have to be held in a particular position relative to the connecting member.

Further advantageous embodiments of the system according to the invention are described in the claims and the description below with reference to the drawing, in which:

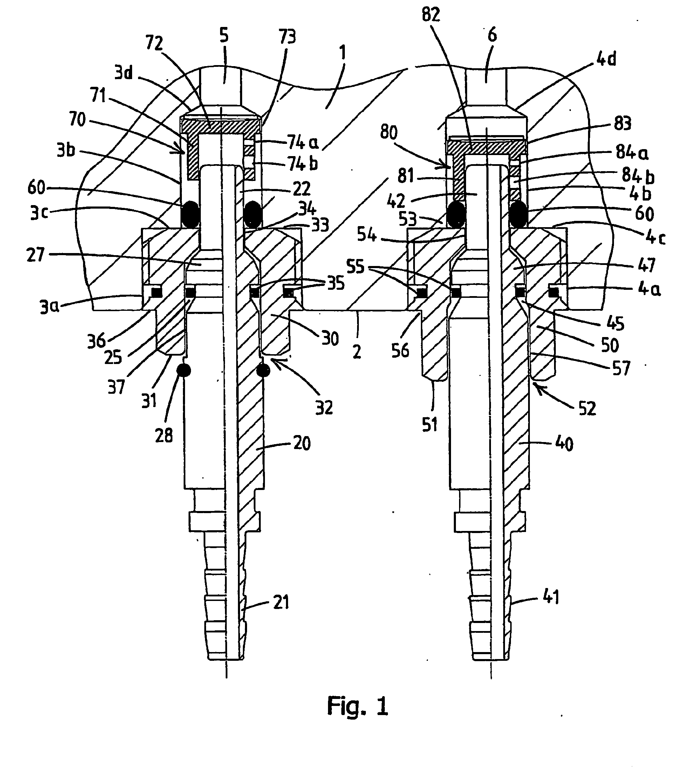

Fig. 1 shows in cross section a preferred embodiment of the system according to the invention.

In Figure 1 part of the housing 1 of a hydraulic apparatus can be seen, for example an electrically driven pump of a cab tilting device for tilting a vehicle cab.

In Figure 1 a first insertion fitting 20 and a second insertion fitting 40 can also be seen, each essentially tubular and having an internal channel for the passage of hydraulic fluid. Also each of said fittings 20, 40 here is provided on one end with a hose pillar 21, 41 for the connection to said pillars of a first and second hydraulic line (not shown) respectively, in particular hydraulic hoses. In an alternative design the fittings are of an angled design, e.g having a pillar at 90 degrees angle.

It will be clear that the method of attaching the hydraulic hoses to the insertion fitting can be performed in many ways. Furthermore, if desired, the lines can be in the form of metal pipes.

The housing 1 of the hydraulic apparatus has a connection side 2, where two bores 3, 4 are provided next to each other, in which bores a first connecting member 30 and a second connecting member 50 are fixed.

In the example illustrated the bores 3, 4 are of a stepped design, with a first part 3a, 4a for accommodation of the connecting members 30, 50, and a second part 3b, 4b lying lower down, which in turn connects to a hydraulic duct 5, 6 in the housing 1. The second parts 3b, 4b have a smaller diameter than the first parts 3a, 4a of the bores 3, 4, so that a shoulder face 3c, 4c is formed in each case on the transition, against which shoulder face the connecting member 30, 50 rests.

In this example the bore parts 3a, 4a are provided with screw thread, as are the connecting members 30, 50, the connecting members being provided with parallel key faces for screwing the connecting member into the bore with a key.

Each of the connecting members 30, 50 has a body with an insertion bore 32, 52 extending from an insertion side 31, 51 for receiving the corresponding insertion fitting 20, 40 therein.

The insertion bore 32, 52 of each connecting member 30, 50 extends through the body to an outlet opening 34, 54 situated in a rear side 33, 53 of the connecting member.

It can be seen that the second parts 3b, 4b of the bores in the housing 1 lie in line with the outlet openings 34, 54.

It can also be seen that each insertion fitting 20, 40 has an end part 22, 42 which projects through the outlet opening 34, 54 into the second part of the bore. At the level of the rear side of the connecting member the bore parts 3b, 4b have a greater diameter than the diameter of the outlet opening, a sealing ring 60 being disposed in the bore 3b, 4b against the rear side 33, 53 of the connecting member, which sealing ring 60 produces a seal on the end part 22, 42 of the insertion fitting 20, 40 projecting through the opening.

Each of the connecting members 30, 50 has an elastic locking member 35, 55, for example a spring steel clip that is active at a distance from the insertion side of the insertion bore 32, 52. Furthermore, each insertion fitting 20, 40 is provided with a locking formation, here a circular locking groove 25, 45, with which the elastic locking member 35, 55 engages automatically when the insertion fitting 20, 40 is inserted into the corresponding connecting member 30, 50. In this way the insertion fitting is locked in the connecting member.

In the embodiment shown each connecting member 30, 50 has an annular face 36, 56, which in the fitted state connects to the connection side 2 of the hydraulic apparatus 1, the elastic locking member 35, 55 lying on the inside relative to said annular face 36, 56. This means that the locking member is inaccessible when the insertion fitting is fitted. In a suitable embodiment of the locking member, that means that the connection obtained can be disconnected only by unscrewing the connecting member from the housing 1.

The insertion fittings 20, 40 have behind the end part, which is substantially cylindrical here, a conical part 27, 47 with a diameter increasing in the direction away from the end part, the locking groove 25, 45 being formed behind the conical part 27, 47.

In the case of each connecting member 30, 50 the part of the insertion bore extending between the insertion side and the locking member forms a coding part 37, 57, into which a corresponding coding part of the insertion fitting 20, 40 concerned fits. The coding part of each connecting member projects outwards relative to the corresponding annular face.

The coding part 37 of the first connecting member 30 in this case differs from the coding part 57 of the second connecting member 50. Since the coding parts of the insertion fittings 20, 40 are also matched to the corresponding connecting member 30, 50, it is ensured that the first and second insertion fittings can be inserted in a locking manner only into the corresponding first or second connecting member respectively. Switching the lines relative to the connecting member by mistake is consequently impossible.

In the embodiment shown, which in practice is advantageous to produce and is easy to fit, each coding part 37, 57 is substantially cylindrical, the diameter of the coding part 37 of the first connecting member 30 being smaller than that of the coding part 57 of the second connecting member 50.

In this example the length of the coding part 37 of the first connecting member 30 is also less than the length of the coding part 57 of the second connecting member 50, the first insertion fitting 20 having an insertion stop 28, which is at a distance from the locking groove 25 that is greater than the length of the coding part 37 of the first connecting member 30 and is less than the length of the coding part 57 of the second connecting member 50.

Said first insertion stop 28 has a diameter which is larger than that of the coding part 57 of the second insertion member 50. In this way switching the insertion fittings relative to the connecting members 30, 50 by mistake is impossible.

The insertion stop 28 in this example is formed by an outwardly projecting peripheral rib, to be fitted here by a clamping ring in a shallow peripheral groove.

In the embodiment shown provision is also made for each hose connection to have a valve member 70, 80, which serves as a throttle that switches on and off automatically in the hydraulic circuit (for example of a hydraulic cab tilting device).

In the case of hydraulic systems it is often desirable to throttle the fluid flow in a particular direction of the flow, while in the opposite direction the throttling is often not desired. Figure 1 shows an attractive solution for achieving this functionality.

The valve members 70, 80 are each slidably guided relative to the end part 22, 42 projecting into the bore 3b, 4b, here because the valve member 70, 80 has an annular wall 71, 81 which fits in a sliding fit around the end part 22,42. Each valve member further has an end wall 72, 82, which is of a closed design here, leaving clear one or more gaps 73, 83 relative to the bore 3b, 4b.

One or more transverse bores are formed in each annular wall 71, 81, in this case two transverse bores 74a, 74b and 84a, 84b, of differing diameters.

The sliding arrangement of the valve members 70, 80 means that under the influence of hydraulic fluid flow from the line to the apparatus each valve member can be moved from a first position to a second position, and vice versa.

Figure 1 shows that in the case of connecting member 30 hydraulic fluid flows from the line to the apparatus 1, so that the valve member slides and in this case comes to rest against a shoulder 3d formed by the bore 3b. In the process one or more gaps 73 remain open between the valve member 70 and the bore 3b, these gaps being sufficiently large to permit an unthrottled flow of fluid. The two transverse bores 74a, 74b are also open now, since there is no overlap with the end part 22.

In the case of connecting member 50 the situation in which flow is occurring from the housing 1 to the line is illustrated. As a result of this, the valve member 80 has been pushed further over the end part and has even come to rest against the sealing ring 60. Owing to the shift in this direction, a part of the one or more transverse bores 84a, 84b (here bore 84b) has been shut off, and fluid can flow only through the other transverse bore 84, so that a smaller effective passage and a throttled flow are obtained.

In the embodiment shown the insertion fittings are substantially tubular with a central duct for the hydraulic fluid and a rotationally symmetrical external periphery over their full length. This is advantageous for production. The rotationally symmetrical design of the insertion bore, in combination with a rotationally symmetrical design of the part of the insertion fitting to be inserted into it, is also advantageous, partly because the position of the insertion fitting relative to the connecting member is not important now.

## Claims

1. Hydraulic system, comprising a hydraulic apparatus and a group of hydraulic lines which are connected or can be connected to the hydraulic apparatus, which group comprises at least a first and a second line,
in which the apparatus has a housing (1) on which a first and second connecting member (30, 50) are fitted, for connecting the first and the second line respectively,
in which the first and the second line are provided with a first and a second insertion fitting (20, 40) respectively,
each insertion fitting (20, 40) having an internal channel for the passage of hydraulic fluid,
in which each connecting member has a body (31, 51) with an insertion bore (32, 52) for receiving an the respective insertion fitting (20, 40), which insertion bore extends from an insertion side,
in which each connecting member further comprises an elastic locking member (35, 55) which is active at a distance from the insertion side of the insertion bore (32, 52),
in which each insertion fitting (20, 40) is provided with a locking formation (25, 45) with which the elastic locking member engages automatically when the insertion fitting (20, 40) is inserted into the corresponding connecting member (30, 50),
in which a part of each connecting member (30, 50) forms a coding part (37, 57),
in which the coding part (37) of the first connecting member (30) differs with regard to one or more dimensions thereof from the coding part (57) of the second connecting member (50),
and in which the first and second insertion fitting (20, 40) are such that they can be inserted in a locking manner only into the corresponding first and second connecting member (30, 50) respectively,
and wherein the coding part (37,57) of each connecting member (30,50) is formed by a part of the insertion bore (32, 52) of said connecting member (30, 50) between the insertion side and the locking member (35, 55).

2. Hydraulic system according to claim 1, in which each coding part (37, 57) is formed by a substantially cylindrical part of the insertion bore, the diameter of the coding part (37) of the first connecting member being smaller than that of the second connecting member (57), in which the length of the coding part (37) of the first connecting member is less than the length of the coding part (57) of the second connecting member, and in which the first insertion fitting (20) has an insertion stop (28) which is at a distance from the locking formation (25) that is greater than the length of the coding part (37) of the first connecting member and is less than the length of the coding part (57) of the second connecting member, which first insertion stop (28) has a greater diameter than that of the coding part (57) of the second insertion member.

3. Hydraulic system according to claim 1 or 2, in which the insertion bore (32, 52) of each connecting member extends through the body to an outlet opening situated in a rear side (34, 54) of the connecting member, and in which the housing (1) of the hydraulic apparatus is provided with a bore (3b, 4b) in line with the outlet opening, each insertion fitting having an end part (22, 42) projecting through the outlet opening into the bore (3b, 4b).

4. Hydraulic system according to claim 3, in which at the level of the rear side (34, 54) of the connecting member the bore (3b, 4b) has a greater diameter than the diameter of the outlet opening, a sealing ring (60) being disposed in the bore (3b, 4b) against the rear side of the connecting member (30, 50), which sealing ring produces a seal on the end part (22, 42) of the insertion fitting projecting through said opening.

5. Hydraulic system according to one or more of the preceding claims, in which the insertion fitting (20, 40) has a cylindrical end part (22, 42), a conical part connecting to the end part and having a diameter increasing in the direction away from the end part, the locking formation (25, 45) being formed behind the conical part, followed by the part of the insertion fitting which fits into the coding part (37, 57).

6. Hydraulic system according to one or more of the preceding claims, in which the housing of the apparatus has a bore in line with the insertion bore of at least one connecting member, in which bore a valve member (70, 80) is disposed.

7. Hydraulic system according to claims 3 and 6, in which the valve member (70, 80) is slidably guided relative to the end part (21, 41) projecting into the bore, for example the valve member has an annular wall (71, 81) which fits around the end part in a sliding fit.

8. Hydraulic system according to claim 6 or 7, in which under the influence of hydraulic fluid flow from the line to the apparatus the valve member (70, 80) can be moved from a first position to a second position, and vice versa.

9. Hydraulic system according to claim 8, in which the valve member (70, 80) in the first position defines an effective passage for the fluid which differs from the effective passage in the second position.

10. Hydraulic system according to claims 7 and 9, in which the valve member (70, 80) in the first position forms a throttle for the hydraulic fluid and in the second position forms a considerably larger passage.

11. Hydraulic system according to one or more of the preceding claims, in which the housing (1) of the hydraulic apparatus has a connection side (2) provided with bores (3, 4), in which the first and the second connecting members (30, 50) are fixed respectively, the bore in the hydraulic apparatus and each connecting member preferably being provided with screw thread, and each connecting member preferably having parallel key faces for screwing the connecting member into the bore with a key.

12. Hydraulic system according to claim 11, in which each connecting member has an annular face (36, 56), which in the fitted state connects in a sealing manner to the connection side (2) of the hydraulic apparatus, the elastic locking member (35, 55) preferably lying on the inside relative to said annular face (36, 56).

13. Hydraulic system according to claim 12, in which the coding part (37, 57) of each connecting member projects outwards relative to the annular face (36, 56).

14. Hydraulic control device for a movable vehicle part, for example a hydraulic tilting device for a tilting vehicle cab, comprising a hydraulic system according to one or more of the preceding claims.

## Patentansprüche

1. Hydraulisches System, eine Hydraulikvorrichtung und eine Gruppe Hydraulikleitungen umfassend, die an die Hydraulikvorrichtung angeschlossen sind oder angeschlossen werden können, und die Gruppe mindestens eine erste und eine zweite Leitung umfasst,
wobei die Vorrichtung ein Gehäuse (1) aufweist, an dem ein erstes und zweites Anschlussteil (30, 50) angebaut sind, um die erste bzw. zweite Leitung anzuschließen,
wobei die erste bzw. zweite Leitung mit einem ersten bzw. zweiten Einsteckpassanschluss (20, 40) versehen ist,
wobei jeder Einsteckpassanschluss (20, 40) einen Innenkanal zum Durchgang von Hydraulikflüssigkeit besitzt,
wobei jedes Anschlussteil einen Körper (31, 51) mit einer Einsteckbohrung (32, 52) zur Aufnahme des jeweiligen Einsteckpassanschlusses (20, 50) besitzt, die sich ausgehend von einer Einsteckseite erstreckt,
wobei jedes Anschlussteil darüber hinaus ein elastisches Verriegelungsteil (35, 55) aufweist, das in einem Abstand von der Einsteckseite der Einsteckbohrung (32, 52) aktiv ist,
wobei jeder Einsteckpassanschluss (20, 40) mit einem Verriegelungsgebilde (25, 45) versehen ist, mit dem das elastische Verriegelungsteil automatisch in Eingriff gelangt, wenn der Einsteckpassanschluss (20, 40) in das entsprechende Anschlussteil (30, 50) eingesteckt wird,
wobei ein Teil jedes Anschlussteils (30, 50) ein Codierungsteil (37, 57) bildet, wobei sich das Codierungsteil (37) des ersten Anschlussteils (30) im Hinblick auf eine oder mehrere von dessen Abmessungen vom Codierungsteil (57) des zweiten Anschlussteils (50) unterscheidet,
und wobei der erste und zweite Einsteckpassanschluss (20, 40) dergestalt sind, dass sie nur in das korrespondierende erste bzw. zweite Anschlussteil (30, 50) verriegelnd eingesteckt werden können,
und wobei das Codierungsteil (37, 57) jedes Anschlussteils (30, 50) von einem Teil der Einsteckbohrung (32, 52) des Anschlussteils (30, 50) zwischen der Einsteckseite und dem Verriegelungsteil (35, 55) gebildet ist.

2. Hydraulisches System nach Anspruch 1, wobei jedes Codierungsteil (37, 57) von einem im Wesentlichen zylindrischen Teil der Einsteckbohrung gebildet ist, wobei der Durchmesser des Codierungsteils (37) des ersten Anschlussteils kleiner ist als derjenige des zweiten Anschlussteils (57), wobei die Länge des Codierungsteils (37) des ersten Anschlussteils kleiner ist als die Länge des Codierungsteils (57) des zweiten Anschlussteils, und wobei der erste Einsteckpassanschluss (20) einen Einsteckanschlag (28) besitzt, der sich in einem Abstand vom Verriegelungsgebilde (25) befindet, der größer ist als die Länge des Codierungsteils (37) des ersten Anschlussteils und kleiner als die Länge des Codierungsteils (57) des zweiten Anschlussteils, welcher erster Einsteckanschlag (28) einen größeren Durchmesser als der des Codierungsteils (57) des zweiten Einsteckteils aufweist.

3. Hydraulisches System nach Anspruch 1 oder 2, wobei die Einsteckbohrung (32, 52) jedes Anschlussteils durch den Körper zu einer Auslassöffnung verläuft, die sich in einer Rückseite (34, 54) des Anschlussteils befindet, und wobei das Gehäuse (1) der Hydraulikvorrichtung mit einer mit der Auslassöffnung ausgerichteten Bohrung (3b, 4b) versehen ist, wobei jeder Einsteckpassanschluss ein Endteil (22, 42) besitzt, das durch die Auslassöffnung in die Bohrung (3b, 4b) vorsteht.

4. Hydraulisches System nach Anspruch 3, wobei auf der Höhe der Rückseite (34, 54) des Anschlussteils die Bohrung (3b, 4b) einen Durchmesser hat, der größer ist als der Durchmesser der Auslassöffnung, wobei ein Dichtungsring (60) in der Bohrung (3b, 4b) an der Rückseite des Anschlussteils (30, 50) anliegend angeordnet ist, der eine Abdichtung am Endteil (22, 42) des durch die Öffnung vorstehenden Einsteckpassanschlusses herstellt.

5. Hydraulisches System nach einem oder mehreren der vorhergehenden Ansprüche, wobei der Einsteckpassanschluss (20, 40) ein zylindrisches Endteil (22, 42) besitzt, wobei ein konisches Teil, das an das Endteil anschließt und einen Durchmesser hat, der in der Richtung weg vom Endteil zunimmt, wobei das Verriegelungsgebilde (25, 45) hinter dem konischen Teil gebildet ist, gefolgt von dem Teil des Einsteckpassanschlusses, der in das Codierungsteil (37, 57) passt.

6. Hydraulisches System nach einem oder mehreren der vorhergehenden Ansprüche, wobei das Gehäuse der Vorrichtung eine mit der Einsteckbohrung mindestens eines Anschlussteils ausgerichtete Bohrung besitzt, in der ein Ventilglied (70, 80) angeordnet ist.

7. Hydraulisches System nach den Ansprüchen 3 und 6, wobei das Ventilglied (70, 80) in Bezug auf das in die Bohrung vorstehende Endteil (21, 41) gleitend geführt ist, das Ventilglied zum Beispiel eine ringförmige Wand (71, 81) besitzt, die sich in einem Gleitsitz um das Endteil herum anpasst.

8. Hydraulisches System nach Anspruch 6 oder 7, wobei unter dem Einfluss eines Hydraulikflüssigkeitsstroms aus der Leitung zu der Vorrichtung das Ventilglied (70, 80) aus einer ersten Position zu einer zweiten Position, und umgekehrt, bewegt werden kann.

9. Hydraulisches System nach Anspruch 8, wobei das Ventilglied (70, 80) in der ersten Position einen wirksamen Durchgang für die Flüssigkeit festlegt, der sich vom wirksamen Durchgang in der zweiten Position unterscheidet.

10. Hydraulisches System nach den Ansprüchen 7 und 9, wobei das Ventilglied (70, 80) in der ersten Position eine Drossel für die Hydraulikflüssigkeit und in der zweiten Position einen erheblich größeren Durchgang bildet.

11. Hydraulisches System nach einem oder mehreren der vorhergehenden Ansprüche, wobei das Gehäuse (1) der Hydraulikvorrichtung eine Anschlussseite (2) besitzt, die mit Bohrungen (3, 4) versehen ist, in denen das erste bzw. zweite Anschlussteil (30, 50) befestigt sind, wobei die Bohrung in der Hydraulikvorrichtung und jedem Anschlussteil vorzugsweise mit einem Schraubenkopf versehen ist und jedes Anschlussteil vorzugsweise parallele Schlüsselflächen besitzt, um das Anschlussteil mit einem Schlüssel in die Bohrung einzuschrauben.

12. Hydraulisches System nach Anspruch 11, wobei jedes Anschlussteil eine ringförmige Fläche (36, 56) besitzt, die im eingebauten Zustand abdichtend an die Anschlussseite (2) der Hydraulikvorrichtung anschließt, wobei das elastische Verriegelungsteil (35, 55) in Bezug auf die ringförmige Fläche (36, 56) vorzugsweise auf der Innenseite liegt.

13. Hydraulisches System nach Anspruch 12, wobei das Codierungsteil (37, 57) jedes Anschlussteils in Bezug auf die ringförmige Fläche (36, 56) nach außen vorsteht.

14. Hydraulische Betätigungsvorrichtung für ein bewegliches Fahrzeugteil, zum Beispiel eine hydraulische Kippvorrichtung für eine kippbare Fahrerkabine, ein hydraulisches System nach einem oder mehreren der vorhergehenden Ansprüche umfassend.

## Revendications

1. Système hydraulique, comportant un dispositif hydraulique et un groupe de lignes hydrauliques qui sont reliées ou qui peuvent être reliées au dispositif hydraulique, lequel groupe comporte au moins une première et une seconde ligne,
dans lequel le dispositif a un boîtier (1) sur lequel un premier et un second élément de liaison (30, 50) sont montés, pour relier la première et la seconde ligne, respectivement,
dans lequel la première et la seconde ligne sont munies d'un premier et d'un second raccord d'insertion (20, 40), respectivement,
chaque raccord d'insertion (20, 40) ayant un canal intérieur pour le passage de fluide hydraulique,
dans lequel chaque élément de liaison a un corps (31, 51) muni d'un alésage d'insertion (32, 52) pour recevoir le raccord d'insertion respectif (20, 40), lequel alésage d'insertion s'étend à partir d'un côté d'insertion,
dans lequel chaque élément de liaison comporte en outre un élément de blocage élastique (35, 55) qui est actif à une certaine distance du côté d'insertion de l'alésage d'insertion (32, 52),
dans lequel chaque raccord d'insertion (20, 40) est muni d'une formation de blocage (25, 45) avec laquelle l'élément de blocage élastique vient automatiquement en prise lorsque le raccord d'insertion (20, 40) est inséré dans l'élément de liaison correspondant (30, 50),
dans lequel une partie de chaque élément de liaison (30, 50) forme une partie de codage (37, 57),
dans lequel la partie de codage (37) du premier élément de liaison (30) diffère en ce qui concerne une ou plusieurs dimensions de celle-ci par rapport à la partie de codage (57) du second élément de liaison (50),
et dans lequel le premier et le second raccord d'insertion (20, 40) sont tels qu'ils peuvent être insérés de manière bloquante uniquement dans le premier et le second élément de liaison correspondant (30, 50) respectivement,
et dans lequel la partie de codage (37, 57) de chaque élément de liaison (30, 50) est formée par une partie de l'alésage d'insertion (32, 52) dudit élément de liaison (30, 50) entre le côté d'insertion et l'élément de blocage (35, 55).

2. Système hydraulique selon la revendication 1, dans lequel chaque partie de codage (37, 57) est formée par une partie sensiblement cylindrique de l'alésage d'insertion, le diamètre de la partie de codage (37) du premier élément de liaison étant plus petit que celui du second élément de liaison (57), dans lequel la longueur de la partie de codage (37) du premier élément de liaison est inférieure à la longueur de la partie de codage (57) du second élément de liaison, et dans lequel le premier raccord d'insertion (20) a une butée d'insertion (28) qui est à une certaine distance de la formation de blocage (25) qui est plus grande que la longueur de la partie de codage (37) du premier élément de liaison et qui est inférieure à la longueur de la partie de codage (57) du second élément de liaison, laquelle première butée d'insertion (28) a un diamètre plus grand que celui de la partie de codage (57) du second élément d'insertion.

3. Système hydraulique selon la revendication 1 ou 2, dans lequel l'alésage d'insertion (32, 52) de chaque élément de liaison s'étend à travers le corps jusqu'à une ouverture de sortie située dans un côté arrière (34, 54) de l'élément de liaison, et dans lequel le boîtier (1) du dispositif hydraulique est muni d'un alésage (3b, 4b) aligné avec l'ouverture de sortie, chaque raccord d'insertion ayant une partie d'extrémité (22, 42) faisant saillie à travers l'ouverture de sortie dans l'alésage (3b, 4b).

4. Système hydraulique selon la revendication 3, dans lequel au niveau du côté arrière (34, 54) de l'élément de liaison, l'alésage (3b, 4b) a un diamètre plus grand que le diamètre de l'ouverture de sortie, une bague d'étanchéité (60) étant disposée dans l'alésage (3b, 4b) contre le côté arrière de l'élément de liaison (30, 50), laquelle bague d'étanchéité produit un joint sur la partie d'extrémité (22, 42) du raccord d'insertion faisant saillie à travers ladite ouverture.

5. Système hydraulique selon une ou plusieurs des revendications précédentes, dans lequel le raccord d'insertion (20, 40) a une partie d'extrémité cylindrique (22, 42), une partie conique reliée à la partie d'extrémité et ayant un diamètre croissant dans la direction en s'éloignant de la partie d'extrémité, la formation de blocage (25, 45) étant formée derrière la partie conique, suivie de la partie du raccord d'insertion qui s'insère dans la partie de codage (37, 57).

6. Système hydraulique selon une ou plusieurs des revendications précédentes, dans lequel le boîtier du dispositif a un alésage aligné avec l'alésage d'insertion d'au moins un élément de liaison, alésage dans lequel un élément de soupape (70, 80) est disposé.

7. Système hydraulique selon les revendications 3 et 6, dans lequel l'élément de soupape (70, 80) est guidé de manière coulissante par rapport à la partie d'extrémité (21, 41) faisant saillie dans l'alésage, par exemple l'élément de soupape a une paroi annulaire (71, 81) qui s'ajuste autour de la partie d'extrémité dans un ajustement coulissant.

8. Système hydraulique selon la revendication 6 ou 7, dans lequel, sous l'influence d'un écoulement de fluide hydraulique de la ligne jusqu'au dispositif, l'élément de soupape (70, 80) peut être déplacé d'une première position à une seconde position, et vice versa.

9. Système hydraulique selon la revendication 8, dans lequel l'élément de soupape (70, 80) dans la première position définit un passage effectif pour le fluide qui diffère du passage effectif dans la seconde position.

10. Système hydraulique selon les revendications 7 et 9, dans lequel l'élément de soupape (70, 80), dans la première position, forme un étranglement pour le fluide hydraulique et, dans la seconde position, forme un passage considérablement plus grand.

11. Système hydraulique selon une ou plusieurs des revendications précédentes, dans lequel le boîtier (1) du dispositif hydraulique a un côté de liaison (2) muni d'alésages (3, 4), dans lequel les premier et second éléments de liaison (30, 50) sont fixés respectivement, l'alésage dans le dispositif hydraulique et chaque élément de liaison étant de préférence munis d'un filetage de vis, et chaque élément de liaison ayant de préférence des faces de clé parallèles pour visser l'élément de liaison dans l'alésage à l'aide d'une clé.

12. Système hydraulique selon la revendication 11, dans lequel chaque élément de liaison a une face annulaire (36, 56) qui, dans l'état inséré, est reliée de manière étanche au côté de liaison (2) du dispositif hydraulique, l'élément de blocage élastique (35, 55) étant de préférence situé sur l'intérieur par rapport à ladite face annulaire (36, 56).

13. Système hydraulique selon la revendication 12, dans lequel la partie de codage (37, 57) de chaque élément de liaison fait saillie vers l'extérieur par rapport à la face annulaire (36, 56).

14. Dispositif de commande hydraulique pour une partie de véhicule mobile, par exemple un dispositif d'inclinaison hydraulique pour une cabine de véhicule basculable, comportant un système hydraulique selon une ou plusieurs des revendications précédentes.
